# EUROPEAN PATENT APPLICATION

(11) **EP 1 376 396 A1**
(43) Date of publication of application: **02.01.2004**
(21) Application number: 02014419.2
(22) Date of filing: 28.06.2002
(51) Int. Cl.: G06F 17/30

(54) **Decentralized data distribution**

(71) Applicant: SAP Aktiengesellschaft, 69190 Walldorf (DE)
(72) Inventor: Irle, Klaus, 69190 Walldorf (DE); Mühl, Gordon, 76684 Odenhelm (DE)

(57) **Abstract**

Computer landscape with a first and a second computer system provided each with a database, wherein each computer system comprises a consistent data set, the computer system being provided with communication means for communication between the computer systems of the landscape, the computer landscape being provided with identification means for providing data that is transported among computer systems from respective data sets with an identification of the system from which the data originates, and a method for exchanging data between computer systems within a computer landscape, by maintaining a consistent data set within a first computer system of the landscape, identifying modified data within said first computer system of the landscape, composing update information regarding identified modified data, and distributing the update information to at least one other system within the landscape, wherein composing the update information comprises providing data with an identifier of the first computer system.

## Description

The invention relates to a computer landscape and a method for exchanging data between computer systems within a computer landscape. In collaborative business processes, typically several different computer based systems are involved, such as for example ERP (Enterprise Resource Planning) systems. These separate systems communicate with each other using a computer network, thus forming a computer system landscape. Within such a system landscape data needs to be exchanged between and replicated in the systems involved, and continual efforts are needed to maintain consistency of the data across the systems concerned.
A known method keeps the data consist by means of data centralization in which a central database is employed that supplies data to each system within the landscape. Updates of data are maintained within the central database. Disadvantage of such a central database is that it is relatively vulnerable; furthermore maintaining updates of data is costly and with the central database server potentially bottlenecks are created in the supply of data.

An object of the invention is to provide a computer landscape with which data within the computer landscape can be more efficiently kept consistent. To this end the invention provides for a computer landscape according to claim 1.

By providing the computer landscape with identification means that provides data being transported among the computer systems within the landscape with an identification of the system from which the data originates, each system can determine whether the received information for updates is needed for its dataset.

Based on this determination only the required data can be selected so that the updating process is kept efficient.

Further embodiments of the invention are the subject of the dependent claims. Other aspects and advantages of the invention will be apparent from the following example of an embodiment of the invention, which is described referring to the Figs., in which:
Fig. 1 shows a simplified block diagram of the computer network system according to the invention,
Fig. 2 shows schematically a system landscape composed of separate ERP systems, and
Fig. 3 shows schematically an example of a data layer model.

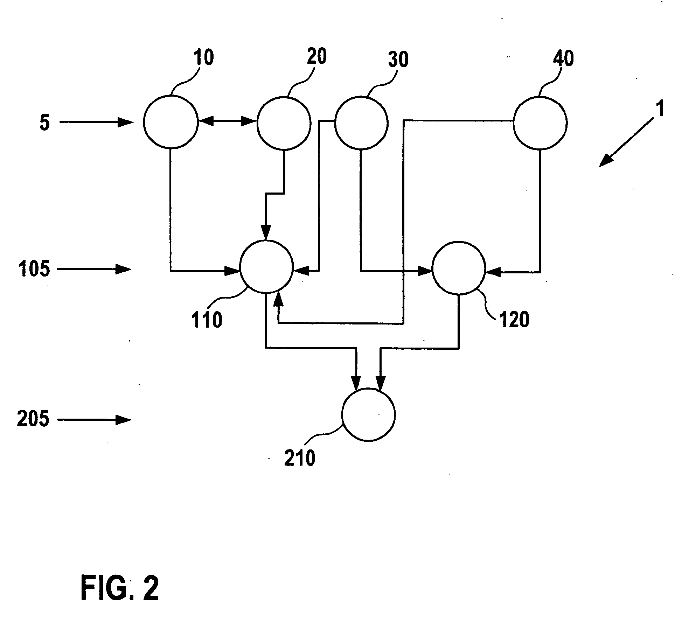

In Fig. 2 a schematic example of a computer system landscape 1 is shown. The computer landscape 1 comprises a number of computer systems (10, 20, 30, 40, 110, 120, 210) that are communicatively connected through for example a computer network or part of a computer network, as indicated by the arrows in Fig. 2. The computer systems 10, 20, 30, 40, 110, 120, 210 can be of any type, and are typically for example enterprise resource planning systems (ERP), a part of such a system or a system related to an ERP system. An example of such an ERP system is the integrated business solution mySAP.com made by SAP AG. In an ERP system business processes are modelled in business objects. Instances of the business object are represented in data generated, stored and manipulated on the computer system. Typically, the computer systems that form part of the landscape according to the invention will each include a database in which the data related to instances of the business objects are stored.

According to the invention data that has to be shared between systems within the landscape is assigned to business objects. Furthermore, the object data is assigned to certain layers, e.g. engineering layer, OEM layer, manufacturer layer, service provider layer, owner/operator layer. These layers relate to logical divisions of the functions of the business objects. Some layers may again be divided into segments (so called field groups), for example if the owner/operator runs different systems for supply chain management and for asset maintenance.

Typically, business object data maintained within a computer system is related to a single layer, such for example the OEM layer. Of course, within a single system data related to more layers can be comprised, for example if the computer system is in use for an entity that is active in multiple businesses, one for example on the engineering layer and the OEM layer.

In the example shown in fig. 2, the system landscape comprises the systems 10, 20, 30, 40, which can be for example ERP systems of OEM suppliers (Original Equipment Manufacturers) store data that belongs to a first layer. The systems 110, 120, which can be for example ERP systems of manufacturers, and contain data related to a second layer. The system 210, which can be for example an ERP system of an owner/operator, contains data related to a third layer. Typically, the respective systems are geared towards the needs of the users; the ERP system of users in the third layer will for example be directed to maintenance and management (using for example the mySAP.com PLM (product lifecycle management software), whereas the systems with layer one and two data will typically be oriented towards controlling production, using for example the mySAP.com SCM (supply chain management) software. Note that these examples are mentioned as non-limiting examples only. Note that in this example three layers are shown as a non-limiting example; the invention can comprise any number of layers. The invention is not limited to applications related to manufacturing, but can be used with any computer system landscape that comprises a plurality of business application computer systems.

According to the invention, each data layer of an object (and optionally also each segment within a data layer) is assigned to its respective "home" or "original" system, from which the data layer originates. For the identification any known method or device can be used, such a for example a tag or a flag. To obtain unique (and therefore consistent) data elements within the system landscape, according to the invention data needs to be kept consistent only on the original system. To this end every database system within the landscape according to the invention is provided with a consistency function. This consistency function can be implemented according to any known method or device, which methods and devices are readily available in most database management software. This means that for each data segment in each layer of each object there is a unique original system that guarantees data consistency. The reference to the original system is data itself and has to be distributed like the data it belongs to. The reference data can for example be included into the data, or be appended thereto or be referenced to.

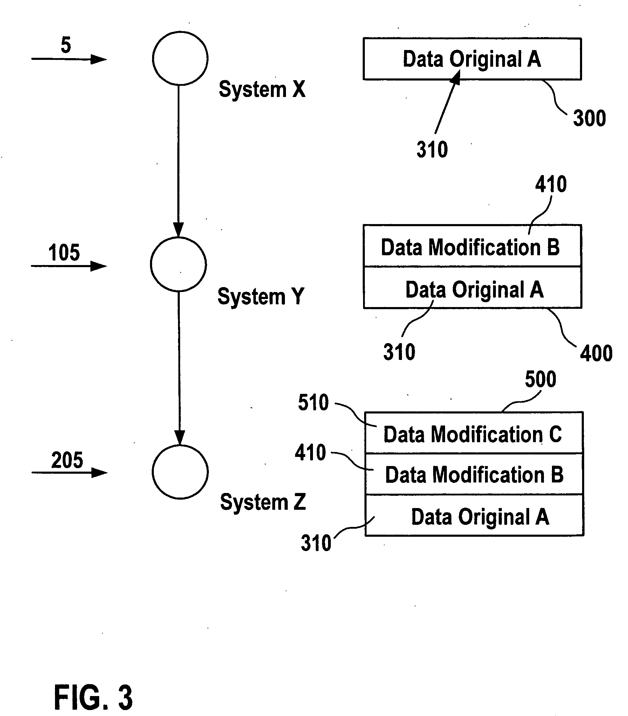

In fig. 3 an example of data contained within the computer landscape 1 is shown. Three systems are shown; for a first layer 5 system X, for the second layer 105 system Y, and for the top layer 205 system Z. In system X a data element 300 is present, containing data 310. The system X is provided with a consistency device that operates to keep the identity of the data element 300 consistent within the system X; such devices are known in the art. The data element contains the identity of the system X. When the data element 300 is exported through some means to the system Y, this system Y recognises the origin of the data element 300. Furthermore, any modifications made to the data element are added in the form of delta information as shown in fig. 3 by element 400 that comprises the information 310 and the delta information 410. Accordingly the element is augmented with additional delta information 510 when send to the upper level system Z, so as to form a data element 500 comprised of data 310, 410, and 510.

As an example the data element 300 can represent an aluminium rim with the system X from a rim manufacturer. The data element 400 represents a wheel within the system Y of a wheel wholesaler, consisting of the aluminium rim with a tyre (the data modification then being the addition of the tyre). The element 500 represents a car in the system Z of a car manufacturer, the car having a wheel (the additions then being the rim and the tyre). From the addition of data modifications to the respective elements a logical hierarchy of the data elements results.

Data within the systems of the landscape is typically being altered frequently. The alterations, such as for example updates, concern all or part of the data within a system. According to the invention, to distribute information throughout the landscape with respect to alterations it is only required to send changes in the data (so called delta information) to other systems within the landscape. In a first step, a system wherein data is altered composes update information comprising at least an indication of the data element affected and the alteration or delta information.

On receipt of delta-information the receiving system checks whether elements of the delta-information are needed, based on the identification data of the data elements, for example by comparing the data elements received with data elements present in the database system. From the received delta-information only the information used in the system is selected for further processing. This reduces in practice the number of data elements that have to be processed, as typically a second system will not use every data element offered by the other system. The needed updates are selected from the offered delta information. Once the needed delta-information is selected the changes can be processed. The processing can be done with any known method, methods which are typically provided for in ERP systems, database systems and the like. In an example embodiment of the invention, for each data element to be updated a check is made whether the data element can be updated as such. This requires a check whether the updated content does not have implications for any other data element that is added by the system. All changes that have no implications for the data elements within the system (for example a mere name or parts number change) are performed automatically. Other changes have to be reviewed, as they can have an influence on what the modifications made by the system. By selecting data elements that can be updated automatically, the number of updates that have be reviewed are reduced. The review of changes can be performed using any know suitable method, for example using rule based selection or manual review by an operator.

The distribution of update information throughout the landscape can be performed using any known method of distribution information through a computer network. As non-limiting examples for the distribution method, a distribution list system and a broadcast system can be used.

The representation of the data can be made in any suitable format. Data handling is made easier if a data format is used that is readily transportable and transformable such as for example XML (extended mark-up language) and XSLT. The implementation of the functionalities can be made using any suitable method. Additional applications base on a (execution) framework, such as for example Java Beans, Active X, Java Servlets, and COM objects can be used. These can for example implement the transport of consistency rules for use by other systems. Also this allows the use of more complex modifications and the transformation to other data formats.

The implementation can be made within each system itself, or within an external adapter (interface) in front of the system. Adapters as such are known in the art, for example as API (application protocol interfaces). In case an adapter is used, the system itself does not have to deal with the various data alterations. Also the system itself does not need to be changed in case of an adapter; this saves time and resources. The functions of the interface or adapter can be integrated in an already available adapter or interface within the database system.

The invention can also be implemented as a web service, which can be implemented to perform the function of the above-mentioned adapters. Through any distribution system according to the invention, the update information is provided to the web service, which web service performs the selection and conversion tasks according to the invention, and sends the processed data to the respective computer systems.

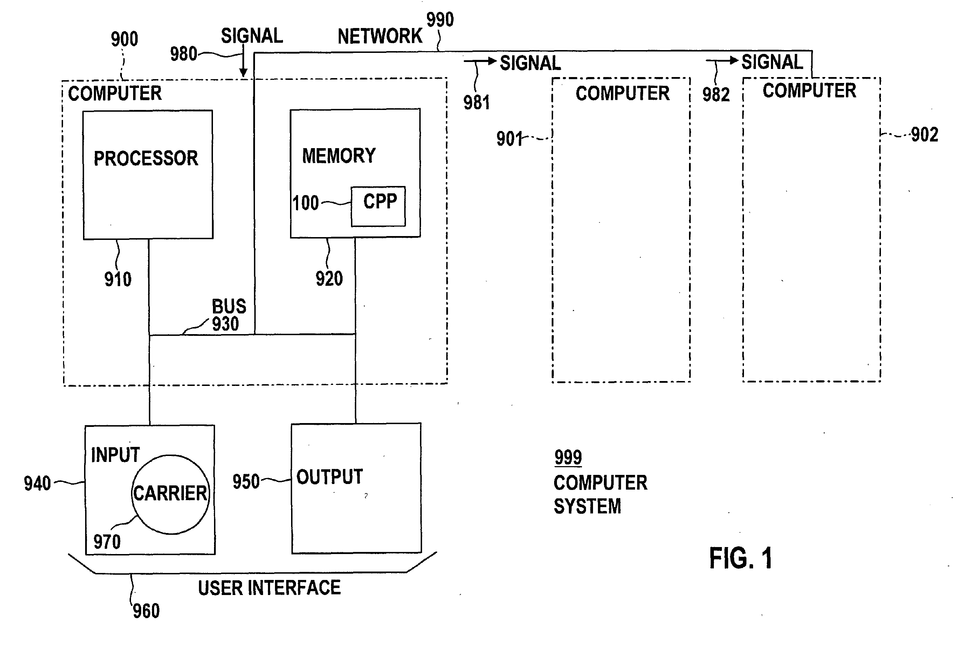

FIG. 1 illustrates a simplified block diagram of a further implementation of the computer landscape according to the invention in the form of a computer network system 999 having a plurality of computers 900, 901, 902 (or 90q, with q=0...Q-1, Q any number), which computers 900, 901, 902 are implementations of the computer systems according to the invention.
Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".
Computers 901, 902 can be, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.
Computer 900 is, for example, a personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like. Processor 910 is, for example, a central processing unit (CPU), a micro-controller unit (MCU), digital signal processor (DSP), or the like..
Memory 920 symbolizes elements that temporarily or permanently store data and instructions. Although memory 920 is illustrated as part of computer 900, memory function can also be implemented in network 990, in computers 901/902 and in processor 910 (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD, holographic storage); (c) semiconductor media, like DRAM, SRAM, EPROM, EEPROM, memory stick, (d) physical media, like a nano-mechanical storage device, or (e) by any other media. Optionally, memory 920 is distributed across different media. Portions of memory 920 can be removable or non-removable. For reading from media and for writing in media, computer 900 uses devices well known in the art such as, for example, disk drives, tape drives.
Memory 920 stores support modules such as, for example, a basic input output system (BIOS), an operating system (OS), a program library, a compiler, an interpreter, and a text- processing tool. Support modules (not illustrated) are commercially available and can be installed on computer 900 by those skilled in the art.
CPP 100 comprises program instructions and - optionally - data that cause processor 910 to execute the respective method steps of the present invention, as described in detail above, for the respective computer systems. CPP 100 defines the operation of computer 900 and its interaction in network system 999. For example and without the intention to be limiting, CPP 100 can be available as source code in any programming language, and as object code ("binary code") in a compiled form. Persons skilled in the art can use CPP 100 in connection with any of the above support modules (e.g., compiler, interpreter, operating system).
Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.
Having described CPP 100, program carrier 970, and program signal 980 in connection with computer 900 is convenient. Optionally, program carrier and program signal 981/982 embody computer program product (CPP) 101/102 to be executed by processor 911/912 in computers 901/902, respectively.
Input device 940 symbolizes a device that provides data and instructions for processing by computer 900. For example, device 940 is a keyboard, a pointing device (e.g., mouse, trackball, cursor direction keys), microphone, joystick, game pad, scanner, or disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.
Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.
Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.
Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.
Networking environments (as network 990) are commonplace in offices, enterprise-wide computer networks, intranets and the Internet (i.e. World Wide Web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.
Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text mark-up language HTML, extensible mark-up language (XML), extensible hyper text mark-up language (XHTML), wireless application mark-up language (WML), Standard Generalized Mark-up Language (SGML) etc. Interfaces coupled between the elements are also known in the art. An interface (not shown) can be, for example, a serial port interface, a parallel port interface, a game port, a universal serial bus (USB) interface, an internal or external modem, a video adapter, or a sound card. Computer and program are closely related. Phrases, such as "the computer provides" and "the program provides", are abbreviations to express actions by a computer that is controlled by a program.

## Claims

1. Computer landscape comprising at least a first and a second computer system provided each with a database, wherein each computer system comprises a consistent data set, the computer system being provided with communication means for communication between the computer systems of the landscape, the computer landscape being provided with identification means for providing data that is transported among computer systems from respective data sets with an identification of the system from which the data originates.

2. Computer landscape according to claim 1, wherein the identification means is provided within each of the computer systems.

3. Computer landscape according claim 1 or 2, wherein the identification means is provided in an adapter.

4. Computer landscape according to any of the preceding claims, the computer system being provided with a modification means for updating data within data set of the respective computer system based on the identification of the data received.

5. Computer landscape according to any of the preceding claims, wherein the respective consistent datasets are at least partially hierarchically ordered.

6. Computer system for use in a computer landscape according to any of claims 1-5.

7. Method for exchanging data between computer systems within a computer landscape, comprising:
maintaining a consistent data set within a first computer system of the landscape,
identifying modified data within said first computer system of the landscape,
composing update information regarding identified modified data, and distributing the update information to at least one other system within the landscape, wherein composing the update information comprises providing data with an identifier of the first computer system.

8. Method according to claim 7 wherein the update information is distributed trough the landscape by means of a subscription system.

9. Method according to claim 7 wherein the update information is distributed trough the landscape by means of a distribution list.

10. Method for updating data in a computer system comprising, receiving update information elements comprising a data identifier that identifies a system of origin for each update information element, and
selecting update information elements based on the presence of data dependency on received update information elements.

11. Computer system for use in a computer system according to claim 6, comprising a communication interface that converts a data format for data received into of a data format for use within the dataset of the respective computer system.

12. Computer program product, provided with code sections to perform when run on a computer system the steps of a method according to any of claims 7-10.
